(19) Europäisches Patentamt / European Patent Office / Office européen des brevets

(11) **EP 3 720 115 B1**

(12) **FASCICULE DE BREVET EUROPEEN**

(45) Date de publication et mention de la délivrance du brevet:
**01.05.2024 Bulletin 2024/18**

(21) Numéro de dépôt: **20167749.9**

(22) Date de dépôt: **02.04.2020**

(51) Classification Internationale des Brevets (IPC):
**H04N 23/745** (2023.01)  **H04N 23/10** (2023.01)

(52) Classification Coopérative des Brevets (CPC):
**H04N 23/745; H04N 23/125; H04N 25/531**

(54) **PROCÉDÉ D'IMAGERIE AVEC LUMIÈRE PULSÉE**

BILDGEBUNGSVERFAHREN MIT GEPULSTEM LICHT

METHOD FOR IMAGING WITH PULSED LIGHT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.04.2019 FR 1903592**

(43) Date de publication de la demande:
**07.10.2020 Bulletin 2020/41**

(73) Titulaire: **Fluoptics**
**38040 Grenoble (FR)**

(72) Inventeurs:
• **DAURES, Anthony**
**92110 Clichy (FR)**
• **RIZO, Philippe**
**38700 La Tronche (FR)**

(74) Mandataire: **INNOV-GROUP**
**310, avenue Berthelot**
**69372 Lyon Cedex 08 (FR)**

(56) Documents cités:
**US-A1- 2014 364 690   US-A1- 2017 238 791**
**US-A1- 2017 295 326**

**EP 3 720 115 B1**

**Description**

L'invention concerne le domaine de l'imagerie de fluorescence. Par exemple, l'invention concerne le domaine de l'imagerie de fluorescence pour des applications médicales.

En imagerie de fluorescence, on peut être amené à éclairer une zone d'intérêt susceptible d'émettre un signal fluorescent avec un éclairage distinct de la source d'excitation utilisée pour exciter un marqueur fluorescent, ou fluorophore, à l'origine du signal fluorescent. Mais cet éclairage peut perturber la détection et la mesure du signal fluorescent à l'aide d'un capteur qui peut être sensible aux longueurs d'onde correspondant à ce signal (ce capteur pouvant être par exemple sensible dans le visible et dans l'infrarouge). Par exemple, les lumières du bloc opératoire (néon, scialytique, ...), qui garantissent une bonne visibilité du champ opératoire avec une très bonne colorimétrie, peuvent aussi altérer la visibilité du signal fluorescent. Notamment, en effet, si les lumières du bloc opératoire ne sont pas filtrées, elles produisent un rayonnement dans l'infrarouge qui est visible par une caméra sensible à la fluorescence. Le rayonnement infrarouge va être reflété par les tissus biologiques et se confondre au signal de fluorescence réellement émis par le fluorophore.

Pour solutionner ce problème, des techniques ont été développées qui consistent à utiliser une lumière pulsée comme source d'excitation de la fluorescence. Selon ces techniques, on éclaire une zone d'intérêt avec une lumière L2 en continu (L2 étant la lumière du bloc par exemple) et on fait pulser une source de lumière L1 (laser ou LED d'excitation de fluorescence) pour avoir une image obtenue avec L1 + L2, puis une image obtenue sans l'éclairage par la source L1, donc une image avec l'éclairage L2 stationnaire uniquement. Alors, on peut considérer, si la scène n'a pas trop bougé, qu'il est possible de remonter à l'information de fluorescence uniquement due à l'éclairage par la source L1 (« image L1 ») en soustrayant l'image obtenue avec L2 seulement (« image L2 ») à celle obtenue avec L1 et L2 (« image L 1 +L2 »). Il est possible ensuite d'afficher l'« image L1 » seule ou de superposer l'« image L1 » sur l'« image L2 » qui apporte dans ce cas une information contextuelle (qui permet de mieux se repérer dans la zone d'intérêt).

Il existe en particulier deux manières de réaliser les « images L2 » et les « images L1+L2 » selon ce type de technique. Soit on utilise un capteur fonctionnant en « obturateur global » (« global shutter » en anglais), soit on utilise un capteur fonctionnant en « obturateur glissant » (« rolling shutter » en anglais). L'utilisation d'un « obturateur global » permet de ne pas avoir (ou peu) de déformation des images si la zone d'intérêt et le capteur ont bougé l'un par rapport à l'autre. Par contre, elle nécessite une lecture, ligne par ligne, des signaux mesurés au niveau des photodiodes du capteur, après que toutes les photodiodes participant à la construction de l'image aient été exposées. Ceci a pour effet de différer le départ d'une nouvelle acquisition après la fin de chaque lecture des signaux correspondant à l'ensemble des lignes. A l'inverse, l'utilisation d'un « obturateur glissant » permet de commencer l'exposition d'un ensemble de photodiodes, pendant la lecture des signaux mesurés au niveau d'un autre ensemble de photodiodes. Par contre, si la zone d'intérêt et le capteur ont bougé l'un par rapport à l'autre pendant l'ensemble de l'acquisition, l'utilisation d'un « obturateur glissant » peut engendrer des déformations des images. En outre, avec des sources de lumière rapides (de type stroboscope par exemple), certaines lignes peuvent ne pas être complètement exposées ou l'exposition de certaines lignes peut être différente de celle d'autres lignes.

Les documents US2017295326 et US2014364690 divulguent des procédés de capture d'images à l'aide de sources de lumière pulsée.

L'invention se place dans le cadre de l'utilisation d'un « obturateur glissant ». Un but de l'invention est alors de fournir au moins deux images, obtenues chacune respectivement sous des éclairages différents, tout en augmentant la quantité d'information détectable et mesurable par le capteur.

A cette fin, il est proposé un procédé d'imagerie selon la revendication 1.

En outre, selon ce procédé, pour chacune des photodiodes d'au moins un groupe de photodiodes de la matrice, on soustrait, à une première valeur correspondant au signal enregistré pendant la première période temporelle et pour la photodiode considérée, une deuxième valeur correspondant au signal enregistré, pendant la deuxième période temporelle, à partir de cette même photodiode, un facteur de correction étant appliqué à au moins une valeur de la liste comprenant la première valeur, la deuxième valeur et le résultat de la soustraction. Ce facteur de correction est déterminé à partir de mesures de calibrations au cours desquelles on réalise, d'une part, au moins une image d'une surface (avantageusement homogène) réfléchissant, de manière constante dans le temps, la lumière émise par une source de lumière dite « de calibration » émettant en continu pendant au moins la totalité du temps d'exposition du capteur et, d'autre part, au moins une image d'une surface réfléchissant, de manière constante dans le temps, la lumière émise par cette même source de lumière de calibration émettant de manière périodique sur la première période temporelle, avec une période correspondant à la somme de la première et de la deuxième période temporelle.

La source de lumière de calibration utilisée pour les étapes de calibration, n'est pas nécessairement la même que celle utilisée pour réaliser les images de la zone d'intérêt. Par exemple, la lumière de calibration peut être une lumière blanche alors que ladite première source de lumière utilisée pour réaliser des images de la zone d'intérêt peut être une lumière émise dans l'infra-rouge si on souhaite réaliser des mesures de fluorescence dans la zone d'intérêt. Par contre, la lumière de calibration doit être émise de manière pulsée avec la même fréquence que ladite première

2

source de lumière utilisée pour réaliser des images de la zone d'intérêt. De même, la lumière de calibration doit être synchronisée de la même façon sur la période d'acquisition des images que lorsque ladite première source de lumière est utilisée pour réaliser des images de la zone d'intérêt. Eventuellement, les filtres utilisés en combinaison avec le capteur ne sont pas les mêmes au cours des étapes de calibration et au cours de l'acquisition des images de la zone d'intérêt.

Dans ce document, on entend par « surface réfléchissant de manière constante dans le temps » une surface passive ou neutre dans le sens où il ne s'agit pas d'une surface émettant ou réfléchissant un signal de fluorescence variant dans le temps indépendamment de la manière dont elle est éclairée. Il ne s'agit notamment pas de la surface d'un tissu dans lequel aurait été injecté un marqueur fluorescent. Il s'agit par exemple de la surface d'une mire ou d'une cible constituée d'un matériau inerte.

Ainsi, grâce à ce procédé, il est possible d'obtenir de manière simple et fiable un facteur de correction qui permet d'optimiser l'utilisation de l'information susceptible d'être fournie par chaque image ou chaque trame. En appliquant ce type de facteur de correction, il est possible de corriger les niveaux d'éclairement des images, alors que le signal mesuré pour chacune des photodiodes de la matrice du capteur ne correspond pas nécessairement au même éclairement de la zone d'intérêt.

Le procédé selon l'invention peut comporter une ou plusieurs des caractéristiques suivantes considérées indépendamment les unes des autres, ou chacune en combinaison d'une ou plusieurs autres :

- le facteur de correction dépend de l'intervalle de temps écoulé entre l'enregistrement des signaux générés par un groupe de référence et l'enregistrement des signaux générés par le groupe auquel appartient la photodiode considérée ;
- les mesures de calibrations sont réalisées au cours d'une étape préalable à l'enregistrement du signal généré par les photodiodes au cours desdites première et deuxième périodes temporelles ;

    -- le signal généré à partir des photodiodes de chaque groupe de photodiodes est enregistré à partir d'un capteur fonctionnant en « obturateur glissant » ;

- le facteur de correction est appliqué au résultat de la soustraction de la deuxième valeur à la première valeur ou inversement ;
- la deuxième période temporelle succède immédiatement à la première période temporelle ;
- au moins un groupe de photodiodes est exposé périodiquement avec un temps d'exposition correspondant à une durée sensiblement égale à la première période temporelle ;
- au moins un groupe de photodiodes est exposé sur la totalité de la première période temporelle, puis sur la totalité de la deuxième période temporelle, la deuxième période temporelle succédant à la première période temporelle, ce groupe étant choisi comme groupe de référence ;
- le groupe de référence est choisi de manière à correspondre au milieu du capteur ;
- au moins l'une des première et deuxième périodes temporelles correspond au cumul d'un temps d'exposition des photodiodes d'un groupe de photodiodes à au moins l'une des première et deuxième sources de lumière, d'un temps d'enregistrement du signal acquis par chaque photodiode de ce groupe et d'un temps de remise à zéro de chacune des photodiodes de ce groupe ;
- la première période temporelle est égale, en durée, à la deuxième période temporelle ;
- au moins un groupe correspond à une série de photodiodes alignées dans la matrice ;
- chaque groupe correspond à une ligne de photodiodes dans la matrice et le facteur correctif $Cr(i,j)$ pour le signal obtenu à partir d'une photodiode située sur la ligne i et la colonne j, est une fonction du type

$$Cr(i,j) = (T_{2k}^{Xi\%.L1+100\%.L2}(i,j) - T_{2k+1}^{Yi\%.L1+100\%.L2}(i,j))/ T^{100\%.L1}(i,j)$$

où
- $T_{2k}^{Xi\%.L1+100\%.L2}(i,j)$ est l'intensité du signal mesuré, correspondant à la photodiode de la ième ligne et de la jème colonne, pour une image $T_{2k}$, obtenue en éclairant la zone d'intérêt avec un pourcentage Xi% du temps d'exposition à la première source de lumière L1, et 100% du temps du temps d'exposition à la deuxième source de lumière L2,
- $T_{2k+1}^{Yi\%.L1+100\%.L2}(i,j)$ est l'intensité du signal mesuré, correspondant à la photodiode de la ième ligne et de la jème colonne, pour une image $T_{2k+1}$ obtenue en éclairant la zone d'intérêt avec un pourcentage Yi% du temps d'exposition à la première source de lumière L1, et 100% du temps du temps d'exposition à la deuxième source de lumière L2, et
- $T^{100\%.L1}(i,j)$ est l'intensité du signal mesuré pour la photodiode de la ième ligne et de la jème colonne, pour une image obtenue en éclairant une surface homogène, pendant la totalité du temps d'exposition du capteur avec la première source de lumière L1 seulement.

A des fins de simplification des explications et des schémas, l'invention est expliquée et décrite ci-dessous en faisant référence à un capteur comprenant des photodiodes réparties dans une matrice d'au moins N lignes et au moins M colonnes de photodiodes, chacun desdits groupes de photodiodes correspondant, à titre d'exemple, à l'une des N lignes.

Dans tous les cas, quelle que soit la répartition des groupes (en ligne, en colonne, ou selon un autre type de répartition), l'ensemble des groupes de photodiodes permet de former une image.

D'autres caractéristiques, buts et avantages de l'invention apparaîtront à la lecture de la description détaillée qui va suivre, et en regard des dessins annexés, donnés à titre d'exemples non limitatifs et sur lesquels :

[Fig.1] représente un dispositif pour la mise en oeuvre d'un procédé selon l'invention,

[Fig.2] représente schématiquement une séquence d'intégration du signal extrait sur les différentes lignes d'un capteur fonctionnant en mode « obturateur glissant » ;

[Fig.3] représente schématiquement, d'une manière différente de la figure précédente, une séquence d'intégration du signal extrait sur les différentes lignes d'un capteur fonctionnant en mode « obturateur glissant » ;

[Fig.4] représente schématiquement une séquence d'intégration du signal extrait sur les différentes lignes d'un capteur fonctionnant en mode « obturateur glissant », combinée selon l'art antérieur à des périodes d'éclairage par deux types de sources lumineuses, utilisées alternativement ;

[Fig.5a] représente schématiquement une séquence d'intégration du signal extrait sur les différentes lignes d'un capteur fonctionnant en mode « obturateur glissant », synchronisée selon l'invention avec des périodes d'éclairage par deux types de sources lumineuses, utilisées alternativement, les première et deuxième périodes d'éclairage étant identiques ;

[Fig.5b] représente schématiquement une séquence d'intégration du signal extrait sur les différentes lignes d'un capteur fonctionnant en mode « obturateur glissant », synchronisée selon l'invention avec des périodes d'éclairage par deux types de sources lumineuses, utilisées alternativement, les première et deuxième périodes d'éclairage étant différentes l'une de l'autre ;

[Fig.6] correspond à une image $T_{2k}$ (avec k une valeur entière positive ou négative), obtenue par éclairage d'une surface homogène, majoritairement illuminée par « L1+L2 » ;

[Fig.7] correspond à une image $T_{2k+1}$ (avec k une valeur entière positive ou négative), obtenue par éclairage d'une surface homogène, majoritairement illuminée par « L2 » ;

[Fig.8] correspond à une image résultant de la soustraction de l'image $T_{2k+1}$ à l'image $T_{2k}$ ;

[Fig.9] illustre un exemple de matrice de correction pour une intégration du signal par ligne de photodiodes ;

[Fig.10] représente un exemple de facteur de correction, en fonction de l'indice de la ligne sur laquelle il est appliqué, pour une intégration du signal par ligne de photodiodes ;

[Fig.11a] montre une image $T_{2k}$ d'un exemple de couple d'images $T_{2k}$ et $T_{2k+1}$ successives ;

[Fig.11b] montre une image $T_{2k+1}$ d'un exemple de couple d'images $T_{2k}$ et $T_{2k+1}$ successives ;

[Fig. 11c] montre l'image calculée conformément au procédé selon l'invention, à partir des images présentées sur les figures 11a et 11b, avant correction à l'aide d'une matrice de correction ;

[Fig. 11d] montre l'image calculée conformément au procédé selon l'invention, à partir des images présentées sur les figures 11a et 11b, après correction à l'aide d'une matrice de correction ;

[Fig. 11e] montre pour comparaison l'image vraie correspondant à l'image calculée montrée à la figure 11d ;

[Fig.12] montre un exemple de superposition, sur une image de contexte, d'une image en transparence, telle que celle montrée sur la figure 11c, après colorisation de celle-ci ;

[Fig.13] représente schématiquement des fonctions pouvant être utilisées pour rehausser l'intensité de certains pixels sur une image affichée ;

[Fig.14] représente schématiquement des fonctions pouvant être utilisées pour rehausser l'intensité de certains pixels sur une image affichée ;

[Fig.15] illustre un exemple de matrice de correction pour une intégration du signal, de manière linéaire, pour une extraction du signal des photodiodes suivant des colonnes ;

[Fig.16] illustre un exemple de matrice de correction pour une intégration du signal, de manière non-linéaire, pour une extraction du signal des photodiodes suivant des lignes ;

[Fig.17] illustre un exemple de matrice de correction pour une intégration du signal, de manière non-linéaire, pour une extraction du signal des photodiodes suivant des colonnes,

[Fig.18] illustre un exemple de matrice de correction pour une intégration du signal, de manière non-linéaire, pour une extraction du signal des photodiodes par photodiode ; et

[Fig.19] représente schématiquement un exemple de logigramme pour la mise en oeuvre du procédé selon l'invention.

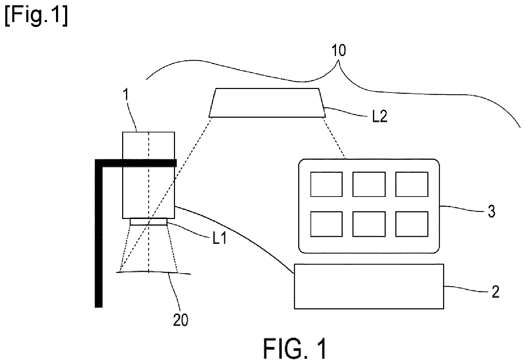

Un exemple de mode de réalisation d'un dispositif 10 de suivi de la fluorescence émise à la surface du tissu biologique ou toute autre zone d'intérêt 20 est représenté sur la figure 1.

La zone d'intérêt 20 à observer est éclairée par une source de lumière pulsée L1 et en continu par une source de lumière L2. La source de lumière L2 est par exemple une source de lumière adaptée pour éclairer un bloc opératoire, tel qu'un scialytique, ou une source incorporée au boîtier d'une sonde 1 faisant partie du dispositif 10.

La source de lumière pulsée L1 (laser par exemple) est adaptée pour émettre un rayonnement d'excitation d'un marqueur de fluorescence ou fluorophore.

La sonde 1 comporte également une caméra dite « de fluorescence » pour capturer des images de fluorescence (dans le proche infra-rouge ou plus généralement dans des longueurs d'ondes détectées par cette caméra « de fluorescence »). La caméra de fluorescence comprend un capteur sensible à la lumière de fluorescence émise par le fluorophore à la surface de la zone d'intérêt 20. Autrement dit, cette caméra de fluorescence est dotée d'au moins un capteur adapté pour capter des images dans le proche infra-rouge ou plus généralement dans les longueurs d'ondes émises par des marqueurs fluorescents (et notamment entre 700 et 900 nanomètres). Ce capteur est aussi adapté pour capter des images dans d'autres zones spectrales et notamment dans le visible. Il est aussi possible d'utiliser, selon une variante, une sonde 1 comportant une première caméra de fluorescence pour capturer des images de fluorescence (par exemple dans le proche infra-rouge) et une deuxième caméra pour capturer des images dans le visible.

Le capteur comprend des photodiodes réparties dans une matrice d'au moins N lignes et au moins M colonnes de photodiodes. Le capteur est par exemple un capteur linéaire de type CMOS (acronyme de « Complementary Metal-Oxide Semiconductor »). En outre, le capteur est doté d'un mode de fonctionnement de type « obturateur glissant ».

Le dispositif 10 comporte également un ordinateur 2. L'ordinateur 2 peut être un ordinateur générique. Par exemple, il est doté d'un microprocesseur Intel® Core i3 à 2,7GHz, d'une mémoire RAM de 4Go et d'un disque dur de 500Go). La sonde 1 est par exemple connectée à l'ordinateur 2, pour asservir le fonctionnement de la sonde 1, ainsi que pour enregistrer et stocker les images capturées par chaque caméra. L'ordinateur 2, à l'aide d'un programme d'ordinateur adapté, fournit donc :

- des moyens d'enregistrement pour enregistrer le signal électrique généré à partir de chaque photodiode, le signal extrait pour chaque photodiode étant utilisé pour former un pixel sur une image,

- des moyens d'asservissement pour asservir les moyens d'enregistrement ; c'est-à-dire pour enregistrer séquentiellement le signal intégré par un groupe de photodiodes de la matrice, avant d'extraire et d'enregistrer le signal intégré par un autre groupe de photodiodes de la matrice,

- des moyens de synchronisation de la source de lumière pulsée L1 avec une séquence d'intégration du signal sur différents groupes de photodiodes ; c'est-à-dire des moyens pour contrôler l'allumage et l'extinction de la source de lumière L1.

L'ordinateur 2 permet également de réaliser un traitement des images obtenues que ce soit dans le proche infra-rouge, par exemple, ou dans le visible. Le dispositif 10 comporte aussi des moyens de visualisation et d'affichage 3 (écran) d'images avant et/ou après traitement.

La sonde 1 est éventuellement maintenue, à l'aide d'un bras de support, de manière stable et à une distance constante de la scène comprenant la zone d'intérêt 20 à observer et étudier (il peut toutefois y avoir un léger déplacement de la scène du fait notamment de la respiration du patient par exemple). Cependant, avec une fréquence d'acquisition suffisamment élevée (par exemple de 25 images par secondes), il est possible de travailler « à main levée » sans bras de support, tout en évitant les artéfacts.

Un traceur fluorescent, ou fluorophore, est injecté en intra-veineuse. Alternativement, on n'injecte pas de traceur et on détecte un signal d'autofluorescence. Le signal d'émission du fluorophore est capté par le capteur de la sonde 1 et est enregistré.

Le signal capté par chacune des photodiodes du capteur est associé à un pixel.

A titre d'exemple et pour simplifier les explications, l'invention est décrite en faisant référence à des groupes de photodiodes agencées selon les N lignes du capteur, mais ces groupes pourraient tout aussi bien être organisés en colonnes, en ilots, etc.

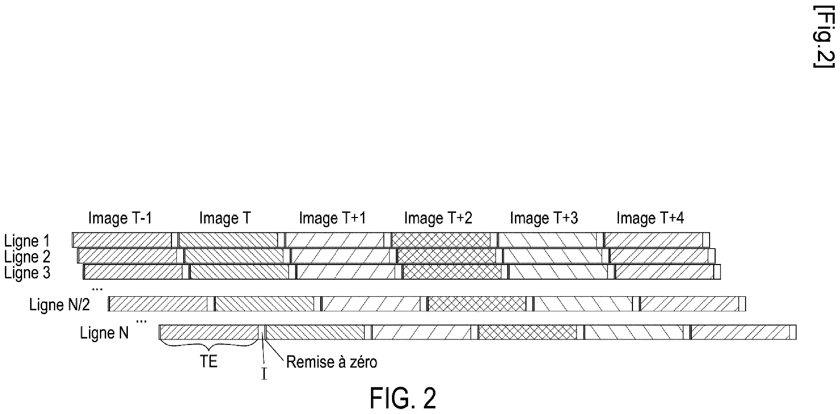

Comme illustré par la figure 2, selon l'exemple d'organisation des photodiodes choisi pour illustrer l'invention, les photodiodes de la ligne 1 sont exposées pendant un temps d'exposition TE. Puis le signal généré sur chaque photodiode de la ligne 1 est extrait pendant un intervalle de temps I. Enfin, les photodiodes de cette ligne sont remises à zéro avant de procéder à une nouvelle acquisition (c'est-à-dire : Exposition, extraction du signal et remise à zéro), et ainsi de suite.

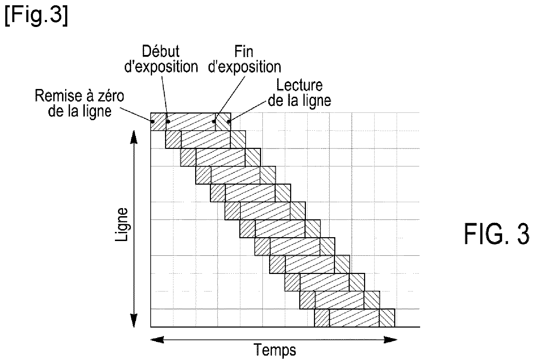

Comme illustré également par la figure 3, la même séquence d'acquisition est reproduite à partir de la ligne 2, de la ligne 3, ... de la ligne i, ... et de la ligne N, avec un décalage dans le traitement de chaque ligne correspondant notamment à l'intervalle de temps nécessaire pour l'extraction du signal de la ligne précédente, conformément au fonctionnement en « obturateur glissant » du capteur utilisé pour réaliser les images de fluorescence.

Pour obtenir des images qui correspondent chacune à un éclairage différent, on peut synchroniser chacun des éclairages avec l'exposition, sous un éclairage donné, de toutes les lignes correspondant à chacune des images. Autrement dit, on synchronise l'éclairage pour que toutes les lignes de photodiodes mises en oeuvre pour l'acquisition d'une image soient exposées lorsqu'une ou plusieurs sources (par exemple L1+L2) sont allumées et que toutes les lignes de photodiodes mises en oeuvre pour l'acquisition d'une autre image (postérieurement acquise) soient exposées alors qu'une ou plusieurs autres sources (par exemple L2) sont allumées.

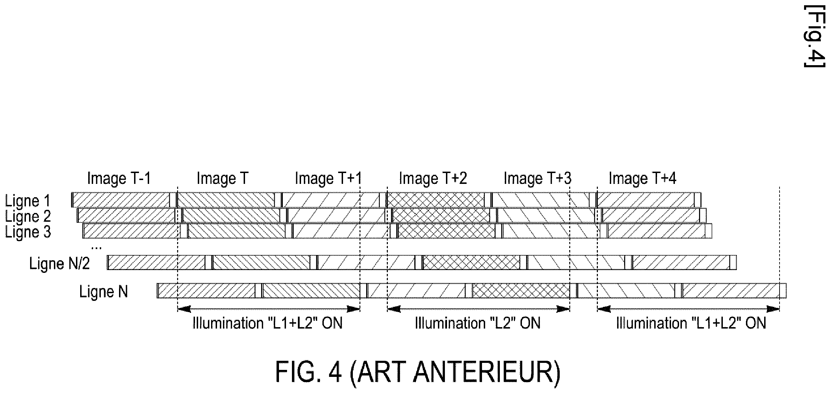

Ceci est illustré par la figure 4. Les lignes de photodiodes mises en oeuvre pour l'acquisition d'une image T sont exposées sur une période de temps suffisante pour qu'elles soient toutes exposées alors que l'éclairage L1+L2 est allumé. Puis, les lignes de photodiodes mises en oeuvre pour l'acquisition d'une image T+2 sont exposées sur une période de temps suffisante pour qu'elles soient toutes exposées alors que l'éclairage L2 seulement est allumé.

On peut ainsi reproduire cette séquence de manière périodique pour que chaque image « $T_{4k}$ » (avec k une valeur entière positive ou négative) corresponde à un éclairage par les sources « L1 + L2 » tandis que chaque image « $T_{4k+2}$ » correspond à un éclairage par la source « L2 ». Néanmoins, selon ce procédé, les images « $T_{2k+1}$ » ne sont jamais exploitées et on obtient donc un couple d'images correspondant chacune respectivement à un éclairage « L1+L2 » et « L2 », toutes les 3 images.

C'est pourquoi, il est proposé, selon l'invention, un autre procédé permettant d'exploiter toutes les images ou trames. Le procédé selon l'invention permet également d'augmenter la cadence de sortie des images. Les images peuvent alors être affichées à la fréquence d'acquisition correspondant à la trame vidéo.

Selon un mode de mise en oeuvre du procédé selon l'invention, les temps d'exposition à chaque type d'éclairage (par exemple : premier éclairage avec les sources L1 et L2 et deuxième éclairage avec la source L2 seulement) sont synchronisés avec la séquence d'acquisition d'au moins une ligne de photodiodes.

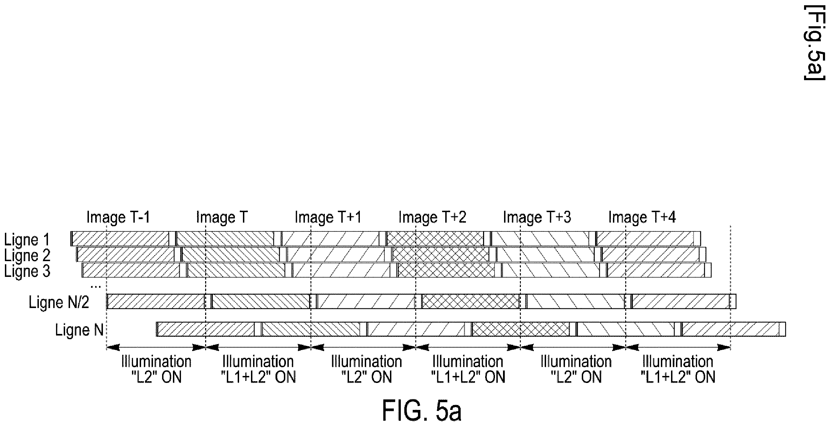

Ceci est illustré sur la figure 5a. Sur cette figure, est schématiquement représentée une séquence au cours de laquelle l'exposition de la ligne N/2 avec des éclairages successifs, alternativement à la fois par L1 et L2 (au cours d'une première période temporelle), puis par L2 seulement (au cours d'une deuxième période temporelle), est synchronisée avec la séquence d'acquisition du signal obtenu au niveau des photodiodes de cette ligne. Autrement dit, les périodes d'éclairage respectivement avec un premier type d'éclairage (par exemple avec les deux sources L1 et L2) ou avec un deuxième type d'éclairage (par exemple avec seulement la source L2) correspondent avantageusement essentiellement à la durée d'exposition du capteur. En pratique ces périodes d'éclairage peuvent être un peu plus longues et s'étendre sur les intervalles de temps I sur lesquels est extrait le signal généré sur chaque photodiode d'une ligne. Les périodes d'éclairage, respectivement avec le premier type ou avec le deuxième type d'éclairage, sont par exemple égales entre elles en durée, se succèdent immédiatement et sont égales au cumul du temps d'intégration, du temps d'enregistrement du signal acquis par chaque photodiode de la ligne de photodiodes et du temps de remise à zéro de chacune de ces photodiodes. Eventuellement, ces périodes d'éclairage peuvent être encore plus courtes ou plus longues que la durée d'exposition du capteur (en évitant toutefois de diviser ou multiplier par deux ces périodes pour ne trop perdre d'information : par exemple on évitera des périodes d'éclairage trop proches de 20 ou 80ms pour une période d'intégration de 40ms).

En outre, ces périodes d'éclairage sont avantageusement synchronisées de manière à ce que les photodiodes d'une ligne, appelée dans ce document ligne ou groupe de photodiodes de référence (par exemple celle d'indice N/2 située au milieu du capteur) soient éclairées par un seul type d'éclairage à la fois (par exemple soit avec les deux sources L1 et L2, soit avec la source L2 seulement), sur la totalité de son temps d'intégration correspondant à chaque image. Ainsi, par exemple, la ligne de photodiodes d'indice N/2 est exposée avec le premier type d'éclairage (avec les deux sources L1 et L2 dans notre exemple) pour le signal correspondant à l'image $T_{2k}$ et est exposée avec le deuxième type d'éclairage (avec la source L2 dans notre exemple) pour le signal correspondant à l'image $T_{2k+1}$, et ainsi de suite. Autrement dit, les moyens de synchronisation de l'allumage et de l'extinction de la source de lumière pulsée L1 suivent une séquence consistant à allumer cette source de lumière L1 au plus tard au début de la période d'intégration de la ligne photodiodes de référence, et à éteindre la source de lumière pulsée L1, au plus tôt à la fin de la période d'intégration de cette même ligne de photodiodes de référence. Cette séquence est reproduite, pour cette même ligne de photodiodes de référence, en sautant la période d'intégration suivante du signal.

Ainsi, la soustraction, pixel à pixel, du signal extrait pour chaque photodiode de la ligne d'indice N/2 d'une image $T_{2k+1}$, au signal de ces mêmes photodiodes d'une image $T_{2k}$, permet de retrouver le signal qui aurait été obtenu pour chaque pixel de cette ligne si les photodiodes correspondantes avaient été éclairées seulement par la source L1.

Plus généralement, un intérêt de l'invention réside dans la possibilité de générer une image résultant d'une soustraction utilisant chaque nouvelle image reçue, notamment en la gardant en mémoire. L'ordre des membres dans la soustraction pixel à pixel dépend de l'indice de la nouvelle image reçue. Ainsi, à réception d'une image d'indice pair, $T_{2k}$, le calcul est réalisé en soustrayant à l'image nouvellement reçue $T_{2k}$, éclairée avec la source « L1 + L2 » sur la ligne d'indice N/2, l'image précédente $T_{2k-1}$ gardée en mémoire et éclairée avec la source « L2 » : « $T_{2k} - T_{2k-1}$ ». A l'inverse, si la nouvelle image reçue est une image d'indice impair $T_{2k+1}$ alors on réalise la soustraction « $T_{2k} - T_{2k+1}$ » ($T_{2k}$ correspondant dans ce cas à l'image conservée en mémoire).

On peut remarquer que les autres lignes (au-dessus et en dessous de celle d'indice N/2) n'ont pas été éclairées, pour l'image $T_{2k}$, par la source L1 pendant tout son temps d'intégration, même si toutes les lignes ont été éclairées pendant tout ce temps avec la source L2. Le procédé selon l'invention permet de résoudre ce problème.

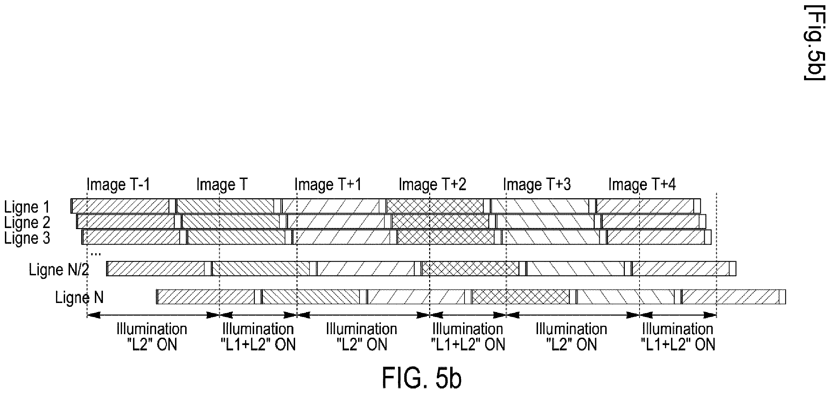

Alternativement, selon une variante illustrée par la figure 5b, les périodes d'éclairage ne sont pas synchronisées sur une ligne de photodiodes particulière et/ou ne sont pas de durées égales. Cela ne change pas le procédé selon l'invention dans sa généralité. Seule la matrice de correction sera différente en fonction du groupe de photodiodes de référence choisi (par exemple, la matrice de correction n'aura pas nécessairement la symétrie de celle obtenue en choisissant la ligne d'indice N/2 comme groupe de photodiodes de référence).

En généralisant donc ce qui précède pour toute ligne de photodiodes :
On appelle $T_{2k}(N/2 , j)$, l'intensité du signal associée au j$^{ième}$ pixel (avec j allant de 0 jusqu'au nombre de photodiodes sur la ligne du capteur) de la ligne N/2 de l'image T d'indice pair 2k, et $T_{2k+1}(N/2 , j)$ l'intensité du signal associée au j$^{ième}$ pixel de la ligne N/2 de l'image T d'indice impair 2k+1.

De manière plus générale encore, on appelle $T_{2k}(i,j)$ l'intensité du signal associée au j$^{ième}$ pixel de la i$^{ième}$ ligne de l'image T d'indice pair 2k et plus précisément $T_{2k}{}^{Lk}(i,j)$ l'intensité du signal associée au j$^{ième}$ pixel de la i$^{ième}$ ligne de l'image T d'indice pair 2k, consécutivement à un éclairage par la source $L_k$ (k allant de 1 à 2 dans notre exemple).

Dans un cas simple où les signaux reçus par la caméra sont linéaires, on peut considérer que l'intensité du signal mesuré sur une photodiode lorsque les sources de lumière L1 et lumière L2 sont actives, est égale à la somme linéaire de l'intensité du signal qui aurait été généré par cette photodiode, lors d'un éclairage avec la source de lumière L1, et de l'intensité du signal qui aurait été généré par cette photodiode, lors d'un éclairage avec la source de lumière L2.

De ce fait, en conservant l'exemple où la période d'éclairage « L1 + L2 » recouvre, ou est synchronisé sur, l'acquisition d'une ligne des images d'indices pairs $T_{2k}$ et l'éclairage « L2 » recouvre, ou est synchronisé sur, l'acquisition de cette même ligne des images d'indices impairs $T_{2k+1}$ on peut généraliser les écritures suivantes :

$$T_{2k}(i,j) = T_{2k}{}^{Xi\%.L1+100\%.L2}(i,j) = X_i\%.T_{2k}{}^{L1}(i,j) + 100\%.T_{2k}{}^{L2}(i,j)$$

où Xi% correspond, pour la i$^{ième}$ ligne, au pourcentage du temps pendant lequel la source L1 est allumée, par rapport au temps d'exposition du capteur, pour l'image $T_{2k}$ ;
et :

$$T_{2k+1}(i,j) = T_{2k+1}{}^{Yi\%.L1+100\%.L2}(i,j) = Y_i\%.T^{L1}(i,j) + 100\%.T^{L2}(i,j)$$

où Yi% correspond, pour la i$^{ième}$ ligne, au pourcentage du temps pendant lequel la source L1 est allumée, par rapport au temps d'exposition du capteur, pour l'image $T_{2k+1}$ (ce pourcentage pouvant être différent de celui correspondant

à l'image $T_{2k}$).

De ce fait, à réception d'une image d'indice impair $T_{2k+1}$, on soustrait, pixel à pixel, les intensités associées à cette image $T_{2k+1}$ aux intensités de la précédente image $T_{2k}$ reçue et archivée, de la manière suivante :

$$T_{2k}(i,j) - T_{2k+1}(i,j) = (100\%.T_{2k}^{L2}(i,j) + Xi\%.T_{2k}^{L1}(i,j)) - (100\%.T_{2k+1}^{L2}(i,j) + Yi\%.T_{2k+1}^{L1}(i,j))$$

Réciproquement, à réception d'une image d'indice pair $T_{2k}$, on soustrait, pixel à pixel, les intensités associées à la précédente image reçue et archivée $T_{2k-1}$ aux intensités de la nouvelle image $T_{2k}$, de la manière suivante :

$$T_{2k}(i,j) - T_{2k-1}(i,j) = (100\%.T_{2k}^{L2}(i,j) + Xi\%.T_{2k}^{L1}(i,j)) - (100\%.T_{2k-1}^{L2}(i,j) + Yi\%.T_{2k-1}^{L1}(i,j))$$

On fait par ailleurs l'hypothèse que le signal extrait d'une photodiode, avec un éclairage par la source de lumière ambiante (apportée par L2) n'a pas changé entre les acquisitions respectives des images $T_{2k-1}$ et $T_{2k}$, ainsi qu'entre les images $T_{2k}$ et $T_{2k+1}$ (ce qui est d'autant plus vrai que l'intervalle de temps entre les acquisitions respectives des images est court). On fait également l'hypothèse que les mouvements de la scène sont négligeables pendant le temps d'acquisition du capteur (par exemple de 40 millisecondes).

Alors on a :

$$100\%.T_{2k}^{L2}(i,j) = 100\%.T_{2k+1}^{L2}(i,j)$$

et

$$100\%.T_{2k-1}^{L2}(i,j) = 100\%.T_{2k}^{L2}(i,j)$$

De même, on fait l'hypothèse que le signal extrait d'une photodiode et correspondant à la fluorescence (provoquée par un éclairage avec la source L1) n'a pas changé entre les acquisitions respectives des images $T_{2k-1}$ et $T_{2k}$ ainsi qu'entre les images $T_{2k}$ et $T_{2k+1}$ (préférentiellement, on ne fait usage de cette hypothèse que pour traiter le signal correspondant à deux images consécutives obtenues sur un temps court), alors :

$$X_i\%.T_{2k}^{L1}(i,j) = X_i\%.T_{2k+1}^{L1}(i,j)$$

et

$$X_i\%.T_{2k-1}^{L1}(i,j) = X_i\%.T_{2k}^{L1}(i,j)$$

Et de même

$$Y_i\%.T_{2k}^{L1}(i,j) = Y_i\%.T_{2k+1}^{L1}(i,j)$$

et

$$Y_i\%.T_{2k-1}^{L1}(i,j) = Y_i\%.T_{2k}^{L1}(i,j)$$

Donc :

$$T_{2k}(i,j) - T_{2k+1}(i,j) = X_i\%.T_{2k}^{L1}(i,j) - Y_i\%.T_{2k+1}^{L1}(i,j) = (X_i\%-Y_i\%).T_{2k}^{L1}(i,j)$$

et

$$T_{2k}(i,j) - T_{2k-1}(i,j) = X_i\%.T_{2k}^{L1}(i,j) - Y_i\%.T_{2k-1}^{L1}(i,j) = (X_i\%-Y_i\%).T_{2k}^{L1}(i,j)$$

Puisque l'éclairage est synchronisé avec le temps d'intégration du capteur, alors chaque ligne reçoit toujours la même proportion de lumière de la part de la source L1 ($X_i\%$ dans l'image $T_{2k}$ et $Y_i\%$ dans l'image $T_{2k+1}$) et donc la valeur ($X_i$-$Y_i$)% est fixe et donnée pour chaque ligne du couple d'images ($T_{2k}$, $T_{2k+1}$) et ($T_{2k-1}$, $T_{2k}$) :

$$(X_i\%-Y_i\%).T_{2k}^{L1}(i,j) = Z_i\%.T_{2k}^{L1}(i,j)$$

On a donc l'intensité $T_{2k}^{L1}(i,j)$ du signal pour le $j^{ième}$ pixel de la $i^{ième}$ ligne correspondant à l'image issue de l'éclairage L1 seul, qui vaut, à réception d'une image $T_{2k+1}$ d'indice impair :

$$T_{2k}^{L1}(i,j) = T_{2k+1}^{L1}(i,j) = (T_{2k}(i,j) - T_{2k+1}(i,j)) / (Z_i\%)$$

et, à réception d'une image $T_{2k}$ d'indice pair :

$$T_{2k}^{L1}(i,j) = T_{2k-1}^{L1}(i,j) = (T_{2k}(i,j) - T_{2k-1}(i,j)) / (Z_i\%)$$

La valeur $Z_i\%$ pour chaque ligne d'indice i est facilement calculable lorsque les images sont obtenues en éclairant une surface homogène avec la source L2 en continu et en éclairant cette même surface avec la source L1, sous forme de pulsations périodiques (Ces pulsations périodiques sont, par exemple comme indiqué ci-dessus, synchronisées avec l'acquisition de la $N/2^{ième}$ ligne du capteur). Dans ce cas, le rapport, pixel à pixel entre l'image résultant de la soustraction ($T_{2k}(i,j) - T_{2k+1}(i,j)$) ou ($T_{2k}(i,j) - T_{2k-1}(i,j)$) avec l'image vraie $T^{100\%.L1}$ obtenue seulement avec la source L1 éclairant une surface homogène permet d'obtenir les différentes valeurs de $Z_i\%$, qui comme indiqué plus haut sont fixes et données pour chaque ligne du couple d'images ($T_{2k}$, $T_{2k+1}$) et ($T_{2k-1}$, $T_{2k}$).

Par ailleurs, en pratique on peut aussi s'affranchir des inhomogénéités de la surface et utiliser une mire telle que celle montrée sur les figures.

Si la surface est effectivement homogène, voire parfaitement, homogène, la connaissance de cette image vraie $T^{100\%.L1}$ peut être suffisante, dans ce cas, on normalise la valeur de l'intensité obtenue pour chaque pixel de l'image $T^{100\%.L1}$ par la valeur de l'intensité maximum dans cette même image $T^{100\%.L1}$. On obtient une image $T^{100\%.L1}$ normalisée et on utilise cette image normalisée pour calculer les valeurs $Z_i\%$.

Mais plus généralement, afin de pouvoir utiliser une mire ou une surface qui n'est pas homogène, il est préférable d'utiliser une image vraie corrigée des inhomogénéités. A cette fin, on réalise au moins une image de cette surface (par exemple, d'une mire) avec la source L1 seule, en continu pendant une certaine période de temps (par exemple pendant la totalité du temps d'exposition du capteur) et on réalise au moins une autre image de cette même surface avec la source L1 en pulsé pendant cette même période de temps (par exemple pendant la totalité du temps d'exposition du capteur). Il peut être avantageux de réaliser plusieurs images, que ce soit avec la source L1 en continu et/ou que ce soit avec source L1 en pulsé, afin de faire une moyenne et de réduire ainsi les erreurs liées à un bruit aléatoire (tel qu'un bruit Poissonnien par exemple). Le rapport, pixel par pixel, de la valeur de l'intensité obtenue dans l'image résultant de l'éclairage L1 pulsé, sur la valeur de l'intensité obtenue dans l'image résultant de l'éclairage L1 en continu, permet d'obtenir une image $T^{100\%.L1}$ aussi normalisée et on utilise cette image normalisée pour calculer les valeurs $Z_i\%$.

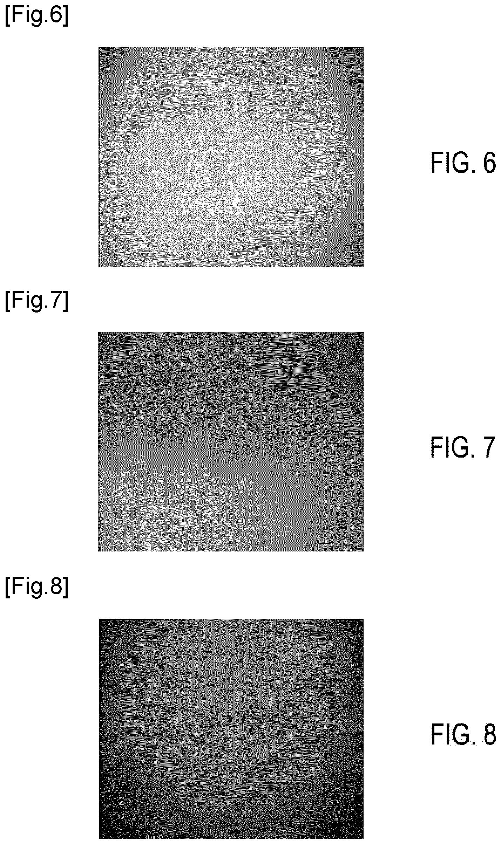

Ainsi, lorsqu'on a enregistré une image $T_{2k}^{Xi\%.L1+100\%.L2}(i,j)$, telle que représentée sur la figure 6, ainsi qu'une image $T_{2k+1}^{Yi\%.L1+100\%.L2}(i,j)$ telle que représentée sur la figure 7, on peut faire la soustraction de ces deux images. Il en résulte une image telle que celle illustrée à la figure 8.

Si la dynamique du capteur est linéaire et si les images n'ont pas subi de correction de gamma, alors on peut directement soustraire entre elles, pixel à pixel, les valeurs du signal associées respectivement à chaque pixel. On fait ensuite le rapport de l'image résultant de la soustraction $T_{2k}$ - $T_{2k+1}$, donc devant correspondre à une image obtenue avec un éclairage par la source L1 seule, sur l'image vraie obtenue en éclairant une surface homogène avec la source L1 seule, $T^{100\%.L1}$ (normalisée).

Les valeurs $Z_i\%$ sont obtenues pour chaque ligne d'indice i (Autrement dit, on raisonne sur des lignes). De manière à faire une lecture par ilots ou groupes de pixels éventuellement répartis de manière aléatoire par exemple, on peut généraliser davantage encore les calculs en raisonnant par pixel et calculer une matrice de correction $Cr(i,j)$ telle que :

$$Cr(i,j) = (T_{2k}^{Xi\%.L1+100\%.L2}(i,j) - T_{2k+1}^{Yi\%.L1+100\%.L2}(i,j)) / T^{100\%.L1}(i,j)$$

On réalise alors une première étape de calibration en faisant l'acquisition d'une série d'images d'une surface avantageusement homogène, avec la source L1 éclairant de manière pulsée et avec la source L2 éteinte (l'éclairage par cette source L2 n'aurait de toutes les façons pas d'incidence sur le calcul suivant puisqu'il est constant). On peut alors calculer

$$(T_{2k}^{Xi\%.L1+100\%.L2}(i,j) - T_{2k+1}^{Yi\%.L1+100\%.L2}(i,j))$$

On réalise aussi une deuxième étape de calibration en faisant l'acquisition d'une série d'images d'une surface homogène, avec la source L1 éclairant de manière continue et avec la source L2 éteinte. On peut alors calculer

$$T^{100\%.L1}(i,j).$$

Le rapport de ces deux mesures (avec L1 pulsé et L2 à 0) et (L1 en continu et L2 à 0) permet de déterminer la matrice de correction Cr(i,j).

Autrement dit, la matrice de correction est obtenue aisément à l'aide de mesures de calibrations qui peuvent être réalisées en usine avant de livrer le dispositif ou à tout moment pendant son utilisation en mettant la sonde face à un élément (éventuellement fluorescent) sensiblement homogène. Le fait de faire un rapport de des valeurs mesurées par calibration permet de corriger d'éventuelles inhomogénéités de la surface de la cible de calibration, ainsi que les éventuelles variations de rendu des différentes photodiodes.

Pour que le résultat de la calibration soit encore plus précis, il est possible de réaliser une moyenne du signal obtenu sur chaque pixel sur plusieurs images du même type avant de faire la soustraction, puis la division indiquées ci-dessus. Autrement dit, les images $T_{2k}^{Xi\%.L1+100\%.L2}(i,j)$ et $T_{2k+1}^{Yi\%.L1+100\%.L2}(i,j)$, dans le calcul décrit ci-dessus, sont des images formées d'une moyenne sur plusieurs images (par exemple l'image $T_{2k}$ correspond à une moyenne calculée sur les images 2,4,6,8,10 et l'image $T_{2k+1}$ à une moyenne calculée sur les images 3,5,7,9,11). Ces moyennes permettent de réduire l'influence du bruit dans les images. De même l'image $T^{100\%.L1}(i,j)$ peut correspondre à une moyenne.

En général, la dynamique des capteurs (CMOS ou CCD) n'est pas linéaire car une correction de gamma (ou facteur de contraste) est appliquée.

Dans ce cas, il est nécessaire de décorriger d'abord le gamma pour revenir à une dynamique de signal linéaire avant de soustraire $T_{2k+1}^{Yi\%.L1+100\%.L2}(i,j)$ à $T_{2k}^{Xi\%.L1+100\%.L2}(i,j)$. L'image $T_{2k}^{Xi\%.L1+100\%.L2}(i,j)$ décorrigée du gamma est notée $^gT_{2k}^{Xi\%.L1+100\%.L2}(i,j)$

On peut alors calculer une matrice de correction Cr(i,j) telle que :

$$Cr(i,j) = (^gT_{2k}^{Xi\%.L1+100\%.L2}(i,j) - {}^gT_{2k+1}^{Yi\%.L1+100\%.L2}(i,j)) / {}^gT^{100\%.L1}(i,j)$$

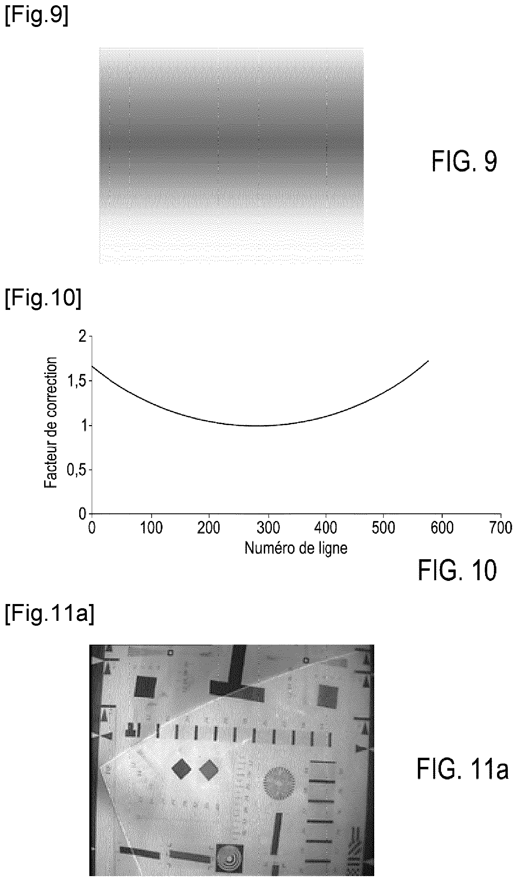

A la suite de ce calcul on obtient, par exemple, la matrice de correction représentée sur la figure 9. La valeur de correction en fonction de l'indice de la ligne peut également être représentée comme sur la figure 10.

En considérant un capteur linéaire n'appliquant pas de correction de gamma, la matrice de correction Cr(i,j) correspond donc à la matrice à appliquer de manière multiplicative après chaque soustraction $T_{2k}$ - $T_{2k-1}$ à réception d'une image d'indice impaire $T_{2k+1}$ et $T_{2k}$ - $T_{2k-1}$ à réception d'une image d'indice pair $T_{2k}$, afin de remonter à l'information de $T_{2k}^{100\%.L1}(i,j)$ :

$$T_{2k}^{100\%.L1}(i,j) = (T_{2k}^{Xi\%.L1+100\%.L2}(i,j) - T_{2k+1}^{Yi\%.L1+100\%.L2}(i,j)) * Cr(i,j)$$

Dans le cas de capteur non linéaire l'équation devient :

$$^gT_{2k}^{100\%.L1}(i,j) = (^gT_{2k}^{Xi\%.L1+100\%.L2}(i,j) - {}^gT_{2k+1}^{Yi\%.L1+100\%.L2}(i,j)) * Cr(i,j)$$

Pour ramener l'image $^gT_{2k}^{100\%.L1}(i,j)$ dans le référentiel de la caméra dans lequel une correction de gamma est appliquée, il faut recorriger l'image $^gT_{2k}^{100\%.L1}(i,j)$ du gamma inverse pour obtenir l'image $T_{2k}^{100\%.L1}(i,j)$ :

$$T_{2k}^{100\%.L1}(i,j) = {}^{g'}\left({}^{g}T_{2k}^{100\%.L1}(i,j)\right)$$

Les figures 11a) à 11d) illustrent le résultat de l'opération de soustraction expliquée ci-dessus, lorsqu'un éclairage pulsé périodique L1 est superposé à un éclairage continu L2.

La figure 11a) correspond à une image $T_{2k}^{Xi\%.L1+100\%.L2}(i,j)$.

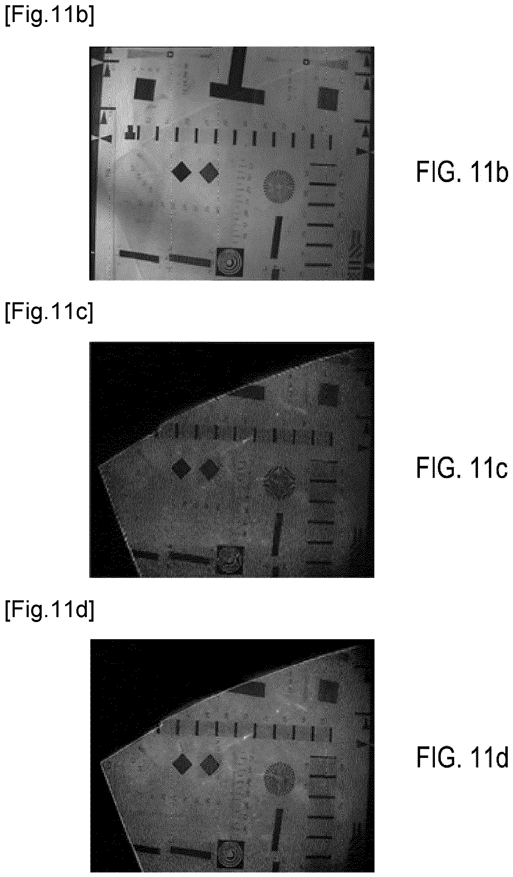

La figure 11b) correspond à une image $T_{2k+1}^{Yi\%.L1+100\%.L2}(i,j)$.

La figure 11c) correspond au résultat de la soustraction

$$^{g}T_{2k}^{Xi\%.L1+100\%.L2}(i,j) - {}^{g}T_{2k+1}^{Yi\%.L1+100\%.L2}(i,j),$$

mais avant correction à l'aide de la matrice de correction.

La figure 11d) correspond à une image $T_{2k}^{100\%.L1}(i,j)$ calculée.

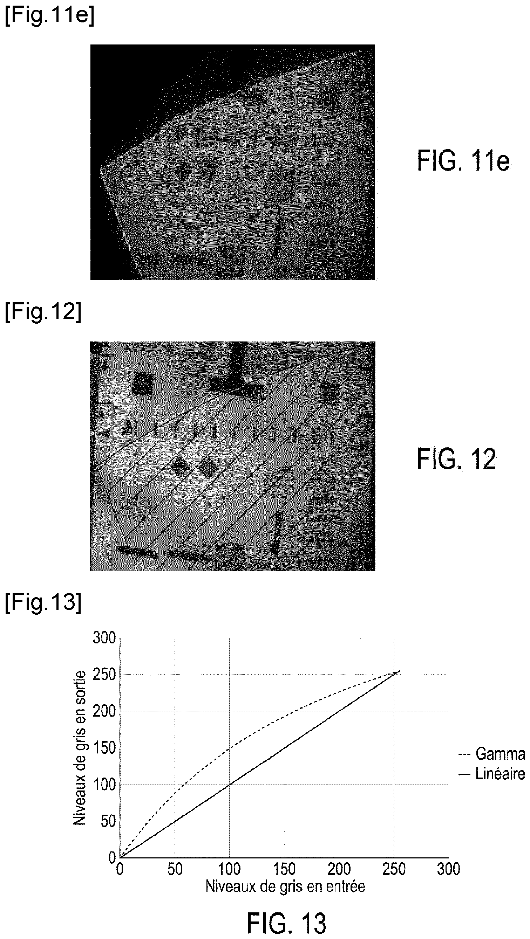

La figure 11e) montre, à titre de comparaison, l'image vraie obtenue avec un éclairage L1 allumé en continu. Il n'y a pas de différence notable entre l'image $T_{2k}^{100\%.L1}(i,j)$ résultant du calcul (figure 11d) et l'image vraie (figure 11e).

La figure 12 montre un exemple possible d'image $T_{2k}^{100\%.L1}(i,j)$ calculée, correspondant à un signal de fluorescence tel qu'il serait détecté avec seulement la source L1 allumée, et superposée sur l'image $T_{2k+1}^{Yi\%.L1+100\%.L2}(i,j)$. L'image $T_{2k+1}^{Yi\%.L1+100\%.L2}(i,j)$ est choisie ici comme image de contexte, mais d'une manière plus générale, une autre image appropriée pourrait être choisie pour fournir une image de contexte. Par exemple, on pourrait calculer une image correspondant à un éclairage avec la source L2 seule et superposer sur celle-ci, l'image calculée, correspondant à un signal de fluorescence tel qu'il serait détecté avec seulement la source L1 allumée. Sur cette figure la zone hachurée correspond à une zone affichée en réalité en couleur (par exemple en vert) et en transparence sur une image de fond fournissant le contexte et correspondant à l'image $T_{2k+1}^{Yi\%.L1+100\%.L2}(i,j)$.

On peut noter que la méthode expliquée ci-dessus peut être appliquée avec une synchronisation des pulsations périodiques de la lumière L1 sur d'autres lignes que la ligne centrale du capteur d'indice N/2. Dans ce cas, le profil de correction (figure 10) ne sera pas centré et les corrections à appliquer pourront être plus fortes sur l'un des deux bords de l'image.

Par ailleurs, dans certaines conditions (par exemple avec une colorisation de l'image de fluorescence et superposition de celle-ci en transparence sur une image de contexte), il est possible que certains faibles signaux de fluorescence ne soient pas ou peu visibles. Dans, ce cas, le procédé selon l'invention comprendra avantageusement une étape de calcul destiné à augmenter l'intensité du signal à afficher, sur une certaine plage de valeurs de celui-ci (en pratique pour les faibles valeurs de ce signal).

Par exemple, on peut appliquer une correction de gamma, comme représenté sur la figure 13. Cette correction a pour effet d'augmenter toutes les valeurs du signal, mais avec une augmentation plus prononcée pour les faibles valeurs de celui-ci.

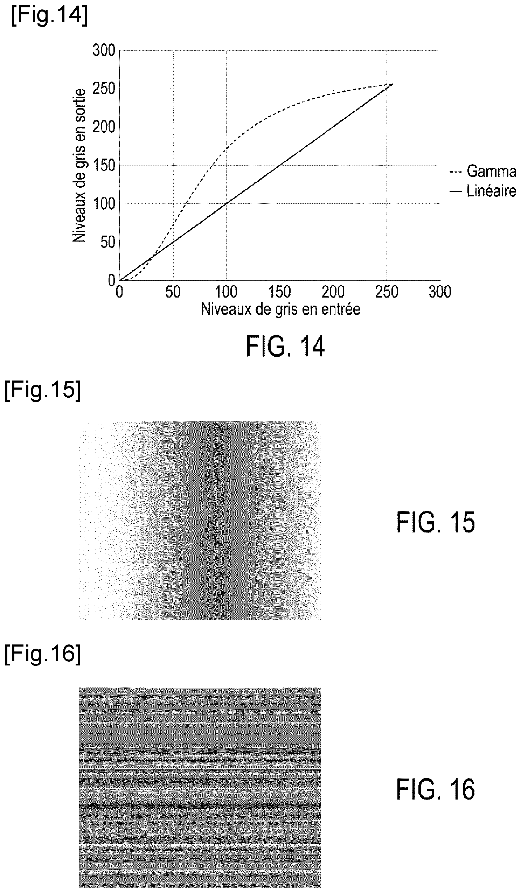

Selon un autre exemple, on peut appliquer une correction non-linéaire du type de celle représentée sur la figure 14 (Sur la légende de cette figure « Gamma » est mentionné, mais celui-ci ne doit pas être confondu avec le « gamma » mentionné ci-dessus ; cette courbe en « S » correspond plutôt à une « table de conversion » (« Look-up-Table » en anglais). Cette correction a pour effet d'augmenter plus particulièrement des valeurs du signal qui ne correspondent pas aux plus faibles valeurs et qui sont susceptibles de correspondre à du bruit de fond.

La fonction de correction n'est pas nécessairement, comme dans l'exemple exposé ci-dessus, fonction de l'indice de la ligne dans laquelle se situe une photodiode. C'est plutôt une fonction du délai avec lequel l'intégration est réalisée sur une photodiode donnée. Ainsi, selon une variante du procédé décrit ci-dessus, l'intégration du signal sur les photodiodes du capteur n'est pas réalisée ligne par ligne, mais colonne par colonne et de manière linéaire. Seule la matrice de correction est modifiée. Au lieu de se présenter comme sur la figure 9, elle peut alors se présenter comme sur la figure 15 par exemple.

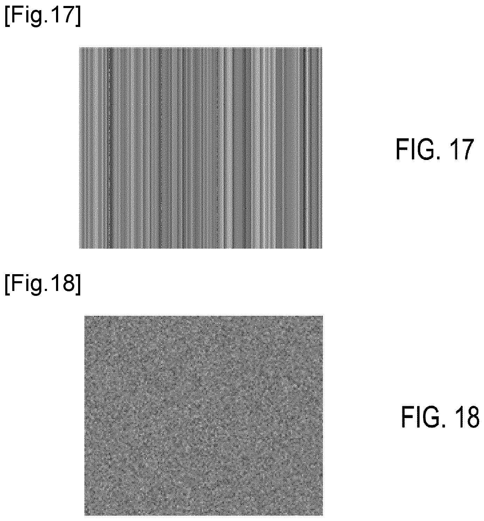

Ou encore, l'intégration du signal sur les photodiodes du capteur peut être réalisée avec un délai spécifique, mais non linéaire, par rapport à l'indice de la ligne ou de la colonne concernée. La matrice de correction peut alors se présenter comme sur la figure 16 ou 17 respectivement.

L'intégration du signal sur les photodiodes du capteur peut être réalisée avec un délai spécifique pour chaque photodiode ou ilot de photodiodes, mais de manière, non linéaire par rapport à la position de la photodiode dans une ligne ou une colonne. La matrice de correction elle peut alors se présenter comme sur la figure 18.

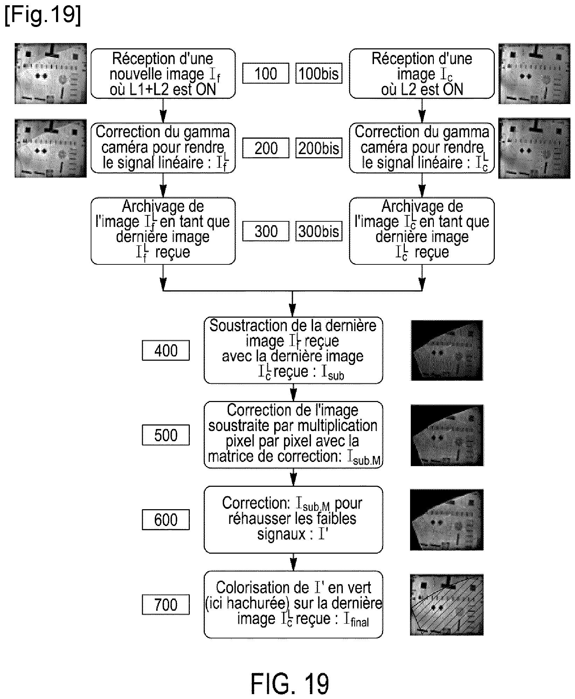

Un exemple de mise en oeuvre du procédé selon l'invention est décrit ci-dessous en relation avec la figure 19.

Selon cet exemple, le procédé comporte :

Une étape préalable de calibration (non-représentée) pour déterminer la matrice de correction Cr(i,j), comme expliqué ci-dessus.

Une étape 100 ou 100bis au cours de laquelle le capteur est exposé à la lumière réfléchie ou émise à la surface de la zone d'intérêt, alors que cette zone est éclairée de manière périodique alternativement soit avec les sources L1 et L2 allumées en même temps, soit avec uniquement la source L2 allumée. En pratique la source L2 éclaire la zone d'intérêt en continu, tandis que la source L1 éclaire la zone d'intérêt avec une pulsation périodique et se superpose à l'éclairage par la source L2. Au cours de cette étape 100 ou 100bis, le signal intégré par les photodiodes du capteur est extrait par groupe de photodiodes, la période d'intégration pour au moins un groupe de photodiodes, dit groupe de référence, étant synchronisé avec la pulsation périodique de l'éclairage par la source L1 (superposé à l'éclairage continu par la source L2). Comme mentionné ci-dessus, un groupe de photodiodes peut être organisé en ligne, ou en colonne, ou en îlot, etc. On notera qu'un groupe de photodiodes peut éventuellement ne comprendre qu'une photodiode. Dans l'exemple choisi ci-dessus pour expliquer le type de calcul mis en oeuvre conformément au procédé selon l'invention, un groupe de photodiodes correspond à une ligne de photodiodes et la ligne d'indice N/2 est choisie comme groupe de référence.

Aux étape 100 et 100bis, les images $T_{2k}$ et $T_{2k+1}$ sont mises en mémoire, sous forme de matrices $T_{2k}^{Xi\%.L1+100\%.L2}(i,j)$ et $T_{2k+1}^{Yi\%.L1+100\%.L2}(i,j)$ (avec k une valeur entière positive ou négative), en vue d'un traitement permettant de retrouver la matrice $T_{2k}^{100\%.L1}(i,j)$ d'une image telle qu'elle aurait été obtenue avec un éclairage par la source L1 seule.

On peut noter que, malgré l'utilisation d'un capteur fonctionnant en mode « d'obturateur glissant », il n'y pas de déformation notable des images jointes au logigramme de la figure 19.

Aux étapes 200 et 200bis, chacune de ces matrices est corrigée du gamma (et éventuellement d'un vignettage) afin de rendre le signal linéaire. Autrement dit à l'issue de ces étapes le signal correspondant à chaque pixel est proportionnel à la quantité de lumière reçue par la photodiode correspondante. On obtient des matrices $^gT_{2k}^{Xi\%.L1+100\%.L2}(i,j)$ et $^gT_{2k+1}^{Yi\%.L1+100\%.L2}(i,j)$.

Aux étapes 300 et 300bis, chacune de ces matrices $^gT_{2k}^{Xi\%.L1+100\%.L2}(i,j)$ et $^gT_{2k+1}^{Yi\%.L1+100\%.L2}(i,j)$ est archivée respectivement en tant que dernière image reçue, avant de réaliser, à l'étape 400 la soustraction, pixel à pixel, $^gT_{2k}^{Xi\%.L1+100\%.L2}(i,j) - {}^gT_{2k+1}^{Yi\%.L1+100\%.L2}(i,j)$.

A l'étape 500, l'image résultant de l'opération de soustraction réalisée à l'étape précédente subit une multiplication, pixel à pixel, avec la matrice de correction $Cr(i,j)$.

Eventuellement, une étape 600 permet d'augmenter certaines valeurs du signal pour rehausser, comme expliqué ci-dessus, l'intensité de la couleur affichée au niveau des pixels correspondant à ces valeurs (en pratique on peut soit réappliquer le gamma du capteur, soit appliquer un gamma différent de celui de la caméra afin de rehausser davantage certains signaux plus faibles, soit appliquer toute autre table de conversion).

A l'étape 700, l'image obtenue à l'étape précédente est colorisée et affichée en transparence sur une image de fond (correspondant à la matrice $T_{2k}^{Xi\%.L1+100\%.L2}(i,j)$ obtenue avec un éclairage combinant les sources L1 et L2).

Chacune des étapes présentées ci-dessus est avantageusement mise en oeuvre à l'aide d'un programme d'ordinateur.

D'une manière générale, le procédé selon l'invention présente notamment l'avantage suivant. La combinaison du protocole de synchronisation de la lumière pulsée excitatrice d'au moins un marqueur fluorescent, avec le fonctionnement en « obturateur glissant » du capteur, avec l'application d'un facteur correctif adapté permet d'optimiser l'utilisation de l'information accessible par imagerie de fluorescence. En effet, l'utilisation d'un capteur en mode « obturateur glissant » permet déjà de raccourcir le temps d'occultation des photodiodes, mais en outre, comme expliqué ci-dessus, le procédé selon l'invention permet de ne perdre aucune image. Chaque nouvelle image correspondant à une exposition sous éclairage pulsé est calculée à la cadence des prises de vue. Ceci donne une très bonne fluidité des images (chaque image calculée est rafraichie en préservant le même nombre d'images par seconde que celui donné par la caméra). En outre, en analysant chaque nouvelle image on limite le décalage temporel qu'il y a entre deux images (et donc on limite les artéfacts pouvant être dû aux modifications d'éclairage ou au déplacement de la caméra ou de la scène).

D'une manière générale, le procédé selon l'invention permet notamment :

- de superposer une image ou un ensemble d'image prises avec un éclairage A sur une image ou un ensemble d'image prises avec un éclairage B ;

- de corriger et/ou améliorer une information présente sur une image ou un ensemble d'image prises avec un éclairage A à l'aide d'une image ou un ensemble d'images prises avec un éclairage B ; en effet, on peut par exemple éclairer des tissus biologiques avec un éclairage dans le proche infrarouge A (avec A qui n'inclut pas B) pour donner une information de contexte et une information d'absorption des tissus biologiques dans cette gamme de longueurs d'onde ; en ajoutant un éclairage pulsé B dans une gamme de longueurs d'onde qui excite un traceur fluorescent, on peut retrouver l'information sur la fluorescence du traceur ; en faisant, l'hypothèse que l'information d'absorption des tissus biologiques aux longueurs d'onde de l'éclairage A est proche de celle résultant d'un éclairage B, on peut corriger l'information sur la fluorescence en lui appliquant un facteur correctif en fonction de l'absorption des tissus biologique, ce facteur correctif ayant été obtenu à partir des images résultant de l'éclairage A ;

- d'offrir une imagerie multi-spectrale en temps réel en permettant de dissocier l'émission due à un éclairage A, par rapport à celle due à un éclairage B qui a d'autres longueurs d'onde que celles de l'éclairage A (les éclairages A et/ou B n'étant pas nécessairement dans l'infra-rouge et/ou étant adaptés à d'autres applications que l'imagerie de fluorescence).

**Revendications**

1. Procédé d'imagerie qui comprend l'utilisation d'un dispositif d'imagerie de fluorescence, ce dispositif comprenant

- un capteur comprenant des photodiodes réparties dans une matrice de photodiodes, ce capteur ayant un temps d'exposition,
- des moyens d'enregistrement, pour enregistrer le signal électrique généré à partir d'au moins une photodiode, ce signal étant utilisé pour définir l'intensité d'un pixel sur une image, le signal généré à partir des photodiodes de chaque groupe de photodiodes étant enregistré à partir du capteur, celui-ci fonctionnant en « obturateur glissant,
- des moyens d'asservissement des moyens d'enregistrement, pour enregistrer séquentiellement le signal généré par un groupe de photodiodes de la matrice, avant d'enregistrer le signal généré par un autre groupe de photodiodes de la matrice, chacun de ces groupes de photodiodes comprenant au moins une photodiode, l'ensemble des groupes de photodiodes permettant de reconstituer une image d'une zone d'intérêt (20),
- une première source de lumière (L1) et une deuxième source de lumière (L2) pour éclairer la zone d'intérêt (20), la deuxième source de lumière (L2) éclairant la zone d'intérêt (20) en continu,
- des moyens pour contrôler l'allumage de la première source de lumière (L1) et l'extinction de la première source de lumière (L1), de manière synchronisée avec une séquence d'intégration du signal extrait sur les groupes de photodiodes,

ce procédé comprenant

- une étape pendant laquelle la première source de lumière (L1) est allumée sur une première période temporelle et une étape pendant laquelle la première source de lumière (L1) est éteinte sur une deuxième période temporelle, la deuxième période temporelle succédant à la première période temporelle, la somme des première et deuxième périodes temporelles étant au moins égale à la période d'exposition du capteur,

- -une étape d'acquisition, à l'aide du capteur et pendant la période d'exposition du capteur, d'une première valeur correspondant à un signal enregistré à l'aide des moyens d'enregistrement, pour une photodiode d'au moins un groupe de photodiodes de la matrice,

- une étape d'acquisition, à l'aide du capteur et pendant la période d'exposition du capteur, d'une deuxième valeur correspondant à un signal enregistré à l'aide des moyens d'enregistrement, pour cette même photodiode, une étape au cours de laquelle on soustrait, pour chacune des photodiodes dudit au moins un groupe de photodiodes de la matrice, à la première valeur la deuxième valeur, et
- une étape de calibration d'un facteur de correction, au cours de laquelle ce facteur de correction est déterminé à partir de mesures de calibrations au cours desquelles on réalise avec le capteur, d'une part, au moins une image d'une surface réfléchissant, de manière constante dans le temps, la lumière émise par une source de lumière de calibration émettant en continu pendant au moins la totalité du temps d'exposition du capteur et, d'autre part, au moins une image d'une surface réfléchissant, de manière constante dans le temps, la lumière émise par la même source de lumière de calibration émettant de manière périodique sur la première période temporelle, avec une période correspondant à la somme de la première et de la deuxième période temporelle, et en faisant le rapport, pour chacune des photodiodes dudit groupe de photodiode de la matrice, des intensités obtenues respectivement pour chacune de ces images,
- une étape au cours de laquelle le facteur de correction est appliqué à au moins une valeur de la liste comprenant la première valeur, la deuxième valeur et le résultat de la soustraction, de manière à obtenir une image correspondant à l'image qui aurait été obtenue avec la première source de lumière (L1) seule.

2. Procédé selon la revendication 1, dans lequel la source de lumière de calibration correspond à la première source de lumière (L1).

3. Procédé selon la revendication 1, dans lequel source de lumière de calibration correspond à une source de lumière distincte de la première source de lumière (L1).

4. Procédé selon l'une des revendications 1 et 2, dans lequel le facteur de correction est déterminé à l'aide de la valeur de l'intensité du signal mesuré pour ladite photodiode considérée, pour une image obtenue en éclairant une surface fluorescente, avec la première source de lumière (L1) seulement.

5. Procédé selon l'une des revendications précédentes, dans lequel le facteur de correction dépend de l'intervalle de temps écoulé entre l'enregistrement des signaux générés par un groupe de référence et l'enregistrement des signaux générés par le groupe auquel appartient la photodiode considérée.

6. Procédé selon l'une des revendications précédentes, dans lequel les mesures de calibrations sont réalisées au cours d'une étape préalable à l'enregistrement du signal généré par les photodiodes au cours desdites première et deuxième périodes temporelles.

7. Procédé selon l'une des revendications précédentes, dans lequel chaque groupe correspond à une ligne de photodiodes dans la matrice et le facteur de correction Cr(i,j) pour le signal obtenu à partir d'une photodiode située sur la ligne i et la colonne j, est une fonction du type

$$Cr(i,j) = (T_{2k}^{Xi\%.L1+100\%.L2}(i,j) - T_{2k+1}^{Yi\%.L1+100\%.L2}(i,j)) / T^{100\%.L1}(i,j)$$

où

- $T_{2k}^{Xi\%.L1+100\%.L2}(i,j)$ est l'intensité du signal mesuré, correspondant à la photodiode de la i$^{ème}$ ligne et de la j$^{ème}$ colonne, pour une image $T_{2k}$, obtenue en éclairant la zone d'intérêt (20) avec un pourcentage $X_i$% du temps d'exposition à la première source de lumière L1, et 100% du temps du temps d'exposition à la deuxième source de lumière L2,
- $T_{2k+1}^{Yi\%.L1+100\%.L2}(i,j)$ est l'intensité du signal mesuré, correspondant à la photodiode de la i$^{ème}$ ligne et de la j$^{ème}$ colonne, pour une image $T_{2k+1}$ obtenue en éclairant la zone d'intérêt (20) avec un pourcentage $Y_i$% du temps d'exposition à la première source de lumière L1, et 100% du temps du temps d'exposition à la deuxième source de lumière L2, et
- $T^{100\%.L1}(i,j)$ est l'intensité du signal mesuré pour la photodiode de la i$^{ème}$ ligne et de la j$^{ème}$ colonne, pour une image obtenue en éclairant une surface homogène, pendant la totalité du temps d'exposition du capteur avec la première source de lumière L1 seulement.

8. Procédé selon la revendication 7, dans lequel on décorrige le gamma avant de soustraire $T_{2k+1}^{Yi\%.L1+100\%.L2}(i,j)$ à $T_{2k}^{Xi\%.L1+100\%.L2}(i,j)$.

9. Procédé selon l'une des revendications précédentes, dans lequel le facteur de correction est appliqué au résultat de la soustraction de la deuxième valeur à la première valeur ou inversement.

10. Procédé selon l'une des revendications précédentes, dans lequel la deuxième période temporelle succède immédiatement à la première période temporelle.

11. Procédé selon l'une des revendications précédentes, dans lequel au moins un groupe de photodiodes est exposé périodiquement avec un temps d'exposition correspondant à une durée sensiblement égale à la première période temporelle.

12. Procédé selon l'une des revendications précédentes, dans lequel au moins groupe de photodiodes est exposé sur la totalité de la première période temporelle, puis sur la totalité de la deuxième période temporelle, la deuxième période temporelle succédant à la première période temporelle, ce groupe étant choisi comme groupe de référence.

13. Procédé selon l'une des revendications précédentes, dans lequel le groupe de référence est choisi de manière à correspondre au milieu du capteur.

14. Procédé selon l'une des revendications précédentes, dans lequel au moins l'une des première et deuxième périodes temporelles correspond au cumul d'un temps d'exposition des photodiodes d'un groupe de photodiodes à au moins l'une des première et deuxième sources de lumière, d'un temps d'enregistrement du signal acquis par chaque photodiode de ce groupe et d'un temps de remise à zéro de chacune des photodiodes de ce groupe.

**Patentansprüche**

1. Bildgebungsverfahren, das die Verwendung einer Fluoreszenzbildgebungsvorrichtung umfasst, wobei diese Vorrichtung umfasst:

   - einen Sensor, der Photodioden umfasst, die in einer Photodiodenmatrix verteilt sind, wobei dieser Sensor eine Belichtungszeit hat,
   - Aufzeichnungsmittel, um das ausgehend von mindestens einer Photodiode erzeugte elektrische Signal aufzuzeichnen, wobei dieses Signal verwendet wird, um die Intensität eines Pixels auf einem Bild zu definieren, wobei das ausgehend von den Photodioden jeder Photodiodengruppe erzeugte Signal ausgehend von dem Sensor aufgezeichnet wird, wobei dieser im "Rolling-Shutter-Modus" arbeitet,
   - Regelungsmittel der Aufzeichnungsmittel, um sequenziell das von einer Photodiodengruppe der Matrix erzeugte Signal aufzuzeichnen, bevor das von einer anderen Photodiodengruppe der Matrix erzeugte Signal aufgezeichnet wird, wobei jede dieser Photodiodengruppen mindestens eine Photodiode umfasst, wobei die Gesamtheit der Photodiodengruppen es ermöglicht, ein Bild eines Bereichs von Interesse (20) zu rekonstruieren,
   - eine erste Lichtquelle (L1) und eine zweite Lichtquelle (L2), um den Bereich von Interesse (20) zu beleuchten, wobei die zweite Lichtquelle (L2) den Bereich von Interesse (20) kontinuierlich beleuchtet,
   - Mittel zum Steuern des Einschaltens der ersten Lichtquelle (L1) und des Ausschaltens der ersten Lichtquelle (L1), synchronisiert mit einer Integrationssequenz des an den Photodiodengruppen extrahierten Signals,

   wobei dieses Verfahren umfasst:

   - einen Schritt, während dessen die erste Lichtquelle (L1) über eine erste Zeitperiode eingeschaltet ist, und einen Schritt, während dessen die erste Lichtquelle (L1) über eine zweite Zeitperiode ausgeschaltet ist, wobei die zweite Zeitperiode auf die erste Zeitperiode folgt, wobei die Summe aus den ersten und zweiten Zeitperioden mindestens gleich der Belichtungsperiode des Sensors ist,
   - einen Schritt des Erfassens, mithilfe des Sensors und während der Belichtungsperiode des Sensors, eines ersten Werts, der einem mithilfe der Aufzeichnungsmittel aufgezeichneten Signal entspricht, für eine Photodiode mindestens einer Photodiodengruppe der Matrix,
   - einen Schritt des Erfassens, mithilfe des Sensors und während der Belichtungsperiode des Sensors, eines zweiten Werts, der einem mithilfe der Aufzeichnungsmittel aufgezeichneten Signal entspricht, für dieselbe Photodiode, einen Schritt, in dessen Verlauf man, für jede der Photodioden der mindestens einen Photodiodengruppe der Matrix, von dem ersten Wert den zweiten Wert subtrahiert, und
   - einen Schritt des Kalibrierens eines Korrekturfaktors, in dessen Verlauf dieser Korrekturfaktor ausgehend von Kalibrierungsmessungen bestimmt wird, in deren Verlauf man mit dem Sensor zum einen mindestens ein Bild einer Fläche realisiert, die, zeitlich konstant, das Licht reflektiert, das von einer Kalibrierungslichtquelle emittiert wird, die während mindestens der gesamten Belichtungszeit des Sensors kontinuierlich emittiert, und zum anderen mindestens ein Bild einer Fläche, die, zeitlich konstant, das Licht reflektiert, das von derselben Kalibrierungslichtquelle emittiert wird, die über die erste Zeitperiode periodisch emittiert, mit einer Periode, die der Summe aus der ersten und der zweiten Zeitperiode entspricht, und unter Bildung des Quotienten, für jede der Photodioden der Photodiodengruppe der Matrix, aus den jeweils für jedes dieser Bilder erhaltenen Intensitäten,
   - einen Schritt, in dessen Verlauf der Korrekturfaktor auf mindestens einen Wert der Liste angewandt wird, die den ersten Wert, den zweiten Wert und das Ergebnis der Subtraktion umfasst, so dass ein Bild erhalten wird, das dem Bild entspricht, das mit der ersten Lichtquelle (L1) allein erhalten worden wäre.

2. Verfahren nach Anspruch 1, bei dem die Kalibrierungslichtquelle der ersten Lichtquelle (L1) entspricht.

3. Verfahren nach Anspruch 1, bei dem die Kalibrierungslichtquelle einer Lichtquelle entspricht, die von der ersten Lichtquelle (L1) verschieden ist.

4. Verfahren nach einem der Ansprüche 1 und 2, bei dem der Korrekturfaktor mithilfe des Werts der Intensität des für die betrachtete Photodiode gemessenen Signals bestimmt wird, für ein Bild, das erhalten wird, indem eine fluoreszierende Fläche nur mit der ersten Lichtquelle (L1) beleuchtet wird.

5. Verfahren nach einem der vorhergehenden Ansprüche, bei dem der Korrekturfaktor von dem Zeitintervall abhängt, das zwischen dem Aufzeichnen der von einer Referenzgruppe erzeugten Signale und dem Aufzeichnen der von der Gruppe, zu der die betrachtete Photodiode gehört, erzeugten Signale verstrichen ist.

6. Verfahren nach einem der vorhergehenden Ansprüche, bei dem die Kalibrierungsmessungen im Verlauf eines Schritts vor dem Aufzeichnen des von den Photodioden im Verlauf der ersten und zweiten Zeitperioden erzeugten Signals ausgeführt werden.

7. Verfahren nach einem der vorhergehenden Ansprüche, bei dem jede Gruppe einer Photodiodenzeile in der Matrix entspricht und der Korrekturfaktor Cr(i,j) für das Signal, das ausgehend von der in der Zeile i und der Spalte j gelegenen Photodiode erhalten wird, eine Funktion ist des Typs

$$\mathrm{Cr}(i,j) = (T_{2k}^{Xi\%.L1+100\%.L2}(i,j) - T_{2k+1}^{Yi\%.L1+100\%.L2}(i,j) ) / T^{100\%.L1}(i,j)$$

in der

- $T_{2k}^{Xi\%.L1+100\%.L2}(i,j)$ die Intensität des gemessenen Signals ist, die der Photodiode der i-ten Zeile und der j-ten Spalte entspricht, für ein Bild $T_{2k}$, das erhalten wird, indem der Bereich von Interesse (20) mit einem Prozentsatz $X_i$ % der Belichtungszeit mit der ersten Lichtquelle L1 und 100 % der Zeit der Belichtungszeit der zweiten Lichtquelle L2 beleuchtet wird,
- $T_{2k+1}^{Y1\%.L1+100\%.L2}(i,j)$ die Intensität des gemessenen Signals ist, die der Photodiode der i-ten Zeile und der j-ten Spalte entspricht, für ein Bild $T_{2k+1}$, das erhalten wird, indem der Bereich von Interesse (20) mit einem Prozentsatz $Y_i$ % der Belichtungszeit mit der ersten Lichtquelle L1 und 100 % der Zeit der Belichtungszeit mit der zweiten Lichtquelle L2 beleuchtet wird,
- $T^{100\%.L1}(i,j)$ die Intensität des Signals ist, das für die Photodiode der i-ten Zeile und der j-ten Spalte gemessen wird, für ein Bild, das erhalten wird, indem eine homogene Fläche während der gesamten Belichtungszeit des Sensors nur mit der ersten Lichtquelle L1 beleuchtet wird.

8. Verfahren nach Anspruch 7, bei dem man Gamma entkorrigiert, bevor $T_{2k+1}^{Y1\%.L1+100\%.L2}(i,j)$ von $T_{2k}^{Xi\%.L1+100\%.L2}(i,j)$ subtrahiert wird.

9. Verfahren nach einem der vorhergehenden Ansprüche, bei dem der Korrekturfaktor auf das Ergebnis der Subtraktion des zweiten Werts von dem ersten Wert oder umgekehrt angewandt wird.

10. Verfahren nach einem der vorhergehenden Ansprüche, bei dem die zweite Zeitperiode unmittelbar auf die erste Zeitperiode folgt.

11. Verfahren nach einem der vorhergehenden Ansprüche, bei dem mindestens eine Photodiodengruppe periodisch mit einer Belichtungszeit belichtet wird, die einer Dauer entspricht, die im Wesentlichen gleich der ersten Zeitperiode ist.

12. Verfahren nach einem der vorhergehenden Ansprüche, bei dem mindestens eine Photodiodengruppe über die gesamte erste Zeitperiode, dann über die gesamte zweite Zeitperiode belichtet wird, wobei die zweite Zeitperiode auf die erste Zeitperiode folgt, wobei diese Gruppe als Referenzgruppe gewählt wird.

13. Verfahren nach einem der vorhergehenden Ansprüche, bei dem die Referenzgruppe so gewählt wird, dass sie der Mitte des Sensors entspricht.

14. Verfahren nach einem der vorhergehenden Ansprüche, bei dem mindestens eine der ersten und zweiten Zeitperioden der Kumulation einer Belichtungszeit der Photodioden einer Photodiodengruppe mit mindestens einer der ersten und zweiten Lichtquellen, einer Aufzeichnungszeit des von jeder Photodiode dieser Gruppe erfassten Signals und einer Zeit zum Zurücksetzen jeder der Photodioden dieser Gruppe auf null entspricht.

**Claims**

1. Imaging method which comprises using a fluorescence imaging device, this device comprising

   - a sensor comprising photodiodes distributed in an array of photodiodes, this sensor having an exposure time,
   - storage means, for storing the electrical signal generated by at least one photodiode, this signal being used to define the intensity of a pixel in an image, the signal generated by photodiodes in each group of photodiodes being stored from the sensor, the latter operating as a "rolling shutter",
   - means for controlling the storage means, for sequentially storing the signal generated by a group of photodiodes in the array, before storing the signal generated by another group of photodiodes in the array, each of these groups of photodiodes comprising at least one photodiode, the groups of photodiodes together making it possible to reconstruct an image of a region of interest (20),
   - a first light source (L1) and a second light source (L2) for illuminating the region of interest (20), the second light source (L2) illuminating the region of interest (20) continuously,
   - means for controlling the switching on of the first light source (L1) and the switching off of the first light source (L1), in synchrony with a sequence of integrating the signal extracted over the groups of photodiodes,

   this method comprising

   - a step during which the first light source (L1) is switched on over a first time period and a step during which the first light source (L1) is switched off over a second time period, the second time period succeeding the first time period, the sum of the first and second time periods being at least equal to the exposure period of the sensor,
   - a step of acquiring, using the sensor and during the exposure period of the sensor, a first value corresponding to a signal stored using the storage means, for a photodiode in at least one group of photodiodes in the array,
   - a step of acquiring, using the sensor and during the exposure period of the sensor, a second value corresponding to a signal stored using the storage means, for this same photodiode,
   - a step during which, for each of the photodiodes in said at least one group of photodiodes in the array, the second value is subtracted from the first value, and
   - a step of calibrating a correction factor, during which this correction factor is determined by calibration measurements during which, on the one hand, at least one image of a surface reflecting, constantly over time, the light emitted by a calibration light source emitting continuously during at least the entire exposure time of the sensor and, on the other hand, at least one image of a surface reflecting, constantly over time, the light emitted by the same calibration light source emitting periodically over the first time period, with a period corresponding to the sum of the first and the second time period, are taken with the sensor, obtaining the ratio, for each of the photodiodes in said group of photodiodes in the array, of the intensities obtained for each of these images respectively,
   - a step during which the correction factor is applied to at least one value from the list comprising the first value, the second value and the result of the subtraction, so as to obtain an image corresponding to the image which would have been obtained with the first light source (L1) alone.

2. Method according to Claim 1, wherein the calibration light source corresponds to the first light source (L1).

3. Method according to Claim 1, wherein the calibration light source corresponds to a light source distinct from the first light source (L1).

4. Method according to one of Claims 1 and 2, wherein the correction factor is determined using the value of the intensity of the signal measured for said photodiode under consideration, for an image obtained by illuminating a fluorescent surface, with only the first light source (L1).

5. Method according to one of the preceding claims, wherein the correction factor depends on the time interval elapsed between when the signals generated by a reference group are stored and when the signals generated by the group to which the photodiode under consideration belongs are stored.

6. Method according to one of the preceding claims, wherein the calibration measurements are taken during a step before the signal generated by the photodiodes during said first and second time periods is stored.

7. Method according to one of the preceding claims, wherein each group corresponds to a row of photodiodes in the array and the correction factor Cr(i,j) for the signal obtained by a photodiode located in the row i and the column j is a function of the type

$$Cr(i,j) = (T2kXi\%.L1+100\%.L2(i,j) - T2k+1Yi\%.L1+100\%.L2(i,j))/ T100\%.L1(i,j)$$

where

- T2kXi%.L1+100%.L2(i,j) is the intensity of the measured signal, corresponding to the photodiode in the ith row and in the jth column, for an image T2k, obtained by illuminating the region of interest (20) for a percentage Xi% of the exposure time to the first light source L1, and 100% of the exposure time to the second light source L2,
- T2k+1Yi%.L1+100%.L2(i,j) is the intensity of the measured signal, corresponding to the photodiode in the ith row and in the jth column, for an image T2k+1 obtained by illuminating the region of interest (20) for a percentage Yi% of the exposure time to the first light source L1, and 100% of the exposure time to the second light source L2, and
- T100%.L1(i,j) is the intensity of the signal measured for the photodiode in the ith row and in the the jth column, for an image obtained by illuminating a homogeneous surface, during the entire exposure time of the sensor to only the first light source L1.

8. Method according to Claim 7, wherein gamma uncorrection is carried out before subtracting T2k+1Yi%.L1+100%.L2(i,j) from T2kXi%.L1+100%.L2(i,j).

9. Method according to one of the preceding claims, wherein the correction factor is applied to the result of subtracting the second value from the first value or vice versa.

10. Method according to one of the preceding claims, wherein the second time period immediately succeeds the first time period.

11. Method according to one of the preceding claims, wherein at least one group of photodiodes is exposed periodically with an exposure time corresponding to a duration substantially equal to the first time period.

12. Method according to one of the preceding claims, wherein at least one group of photodiodes is exposed for the entire first time period, then for the entire second time period, the second time period succeeding the first time period, this group being chosen as a reference group.

13. Method according to one of the preceding claims, wherein the reference group is chosen so as to correspond to the middle of the sensor.

14. Method according to one of the preceding claims, wherein the first and/or second time period corresponds to the sum of an exposure time of the photodiodes in a group of photodiodes to the first and/or second light source, a time when the signal acquired by each photodiode in this group is stored and a time when each of the photodiodes in this group is reset to zero.

[Fig.1]

FIG. 1

[Fig.2]

Ligne 1
Ligne 2
Ligne 3
...
Ligne N/2
...
Ligne N

Image T-1   Image T   Image T+1   Image T+2   Image T+3   Image T+4

TE

Remise à zéro
I

FIG. 2

[Fig.3]

Début d'exposition    Fin d'exposition
Remise à zéro de la ligne    Lecture de la ligne

Ligne

Temps

FIG. 3

EP 3 720 115 B1

Image T-1　　Image T　　Image T+1　　Image T+2　　Image T+3　　Image T+4

Ligne 1
Ligne 2
Ligne 3
...
Ligne N/2
Ligne N

Illumination "L1+L2" ON　　　Illumination "L2" ON　　　Illumination "L1+L2" ON

FIG. 4 (ART ANTERIEUR)

[Fig.4]

[Fig.5a]

FIG. 5a

EP 3 720 115 B1

[Fig.5b]

FIG. 5b

24

[Fig.6]

FIG. 6

[Fig.7]

FIG. 7

[Fig.8]

FIG. 8

[Fig.9]

FIG. 9

[Fig.10]

FIG. 10

[Fig.11a]

FIG. 11a

[Fig.11b]

FIG. 11b

[Fig.11c]

FIG. 11c

[Fig.11d]

FIG. 11d

[Fig.11e]

FIG. 11e

[Fig.12]

FIG. 12

[Fig.13]

FIG. 13

[Fig.14]

FIG. 14

[Fig.15]

FIG. 15

[Fig.16]

FIG. 16

[Fig.17]

FIG. 17

[Fig.18]

FIG. 18

EP 3 720 115 B1

[Fig.19]

Réception d'une nouvelle image $I_f$ où L1+L2 est ON | 100 | 100bis | Réception d'une image $I_c$ où L2 est ON

Correction du gamma caméra pour rendre le signal linéaire : $I_f^L$ | 200 | 200bis | Correction du gamma caméra pour rendre le signal linéaire : $I_c^L$

Archivage de l'image $I_f^L$ en tant que dernière image $I_f^L$ reçue | 300 | 300bis | Archivage de l'image $I_c^L$ en tant que dernière image $I_c^L$ reçue

400 — Soustraction de la dernière image $I_f^L$ reçue avec la dernière image $I_c^L$ reçue : $I_{sub}$

500 — Correction de l'image soustraite par multiplication pixel par pixel avec la matrice de correction: $I_{sub.M}$

600 — Correction: $I_{sub.M}$ pour réhausser les faibles signaux : $I'$

700 — Colorisation de $I'$ en vert (ici hachurée) sur la dernière image $I_c^L$ reçue : $I_{final}$

FIG. 19

31

## RÉFÉRENCES CITÉES DANS LA DESCRIPTION

**Documents brevets cités dans la description**

- US 2017295326 A
- US 2014364690 A